Europäisches Patentamt

European Patent Office

Office européen des brevets

(11) Publication number: **0 193 034 B1**

# EUROPEAN PATENT SPECIFICATION

(45) Date of publication of patent specification: **22.04.92**

(51) Int. Cl.5: **F16L 57/00**, B65G 53/52, F16L 43/00

(21) Application number: **86101845.5**

(22) Date of filing: **13.02.86**

(54) **An articulate bent pipe for transportation of powder and slurry in dry or wet state.**

(30) Priority: **23.02.85 JP 35011/85**

(43) Date of publication of application:
**03.09.86 Bulletin 86/36**

(45) Publication of the grant of the patent:
**22.04.92 Bulletin 92/17**

(84) Designated Contracting States:
**BE DE FR GB IT SE**

(56) References cited:
**DE-C- 411 096**

(73) Proprietor: **I N G Shoji Co., Ltd.**
**4-33, 4 Chome Kamihigashi**
**Hirano-ku Osaka(JP)**

(72) Inventor: **Kawatsu, Hajime**
**No. 12-13, 1 Chome Seifuso**
**Toyonaka-Ci Osaka(JP)**

(74) Representative: **Wächtershäuser, Günter, Dr.**
**Tal 29**
**W-8000 München 2(DE)**

## Description

The present invention relates to an articulate bent pipe as stated in the preamble of the claim, adaptable as a pipe for transportation of powder or slurry in dry or wet state, which is wear resistant and which permits easy partial replacement or repair, when it has been worn.

Pneumatic transporting method is employed for transporting fine powder coal, clinker, fly ash, casting sand, earth and sand, etc., at iron works, cement factories, thermoelectric power stations and foundries, etc. Such transporting pipes often sustain severe wear from conveying media. The wearing is especially conspicuous at the inner surface on the outer bent side of the bent pipe, which is locally eroded in grooves where finally pitting developes, for which repair or total replacement will be required.

According to a method generally practiced as a countermeasure against wear of bent pipes for uses of this kind, a bent pipe made of soft steel or carbon steel is used; a box shape reinforcing member is attached on the outside of the bent pipe initially in anticipation of development of pitting; then, with some material which has wear resistance such as concrete or refractory brick, etc., preliminarily filled in the box, even the bent pipe may be protected against possible leakage of transportation medium by concrete layer and brick thickness, to prevent its leakage to outside, even if any pit is formed in the bent pipe while in use. This method is undesirable, because the weight of the bent pipe is increased and when the inner surface of the pipe's outwardly bent side is pitted, turbulent flow of transporting medium will result, whereby sucking wind force is reduced.

For transport of abrasive media like fly ash or casting sand which cause violent grinding wear, wear resistant cast irons, e.g., high carbon or high chrome cast iron etc., have been used and irregular thickness bent pipes with its outer bent side which tends to sustain especially violent abrasion thickened have been manufactured and in use. However, such wear resistant cast irons do not assure long life. When, for example, a bent pipe of high chrome cast iron with its outwardly bent side thickness 30mm was used in transporting fly ash, a pitting developed in approx. 4 - 6 months.

If wear resistant cast iron of this type is once pitted, its repair by welding is difficult and a welding, if done improperly, might invite cracking and rupture. At present, a leakage proofing method of padding the pitted part with a thick plate of soft steel and welding its circumference is adopted, but after repetition of this method 2 - 3 times, pipe body will crack and total replacement will become necessary.

In the case of slurry transport like pneumatic transport or sand transport by use of pumps, the form of wear by transporting media tends to be erosion or erosion wear which involves local wear. Thus a wear of only a very small part of the total weight of the bent pipe will necessitate repair or replacement, resulting in notable bad economy. Accordingly, development of bent pipes of a material which assures long life and of a construction which permits easy repair is necessary.

From DE-C-411 096 it is already known an articulate bent pipe for transport of powder and slurry comprising a plurality of section shaped nodular pipes by which the angle of R is devided into a required number of segments, the nodular pipes having a wear resistant pipe lining of a predetermined thickness applied thereto, the nodular pipes being replaceably connected one to another the front edge of each wear resistant pipe lining being indented relative to the rear edge of the immediate preceding pipe lining at the inner periphery side of the outer wall of at least those nodular pipes which are located adjacent a position at which an axial extension line of the bore of an upstream side straight pipe portion meets a bent portion of the articulate bent pipe.

With respect to this prior art it is an object of the present invention to provide an articulate bent pipe which permits not only easy repair but also assures longer life.

This object is achieved by the features of the claim.

In the accompanying drawing, in which are shown several of the various possible embodiments of the present invention:

FIG. 1 is a perspective view of an articulate bent pipe;

FIG. 2 is a sectional view of the pipe of FIG. 1 from which the flat bars are removed;

FIG. 3 is a front view of a nodular pipe which composes an articulate bent pipe, another example of this invention;

FIG. 4 is a side view of this nodular pipe; and

FIG. 5 is an explanatory diagram for showing the effect on the flow of the transport medium, when the front edge of a wear resistant pipe is formed lower than the rear edge of another neighboring wear resistant pipe located one node upstream of the former.

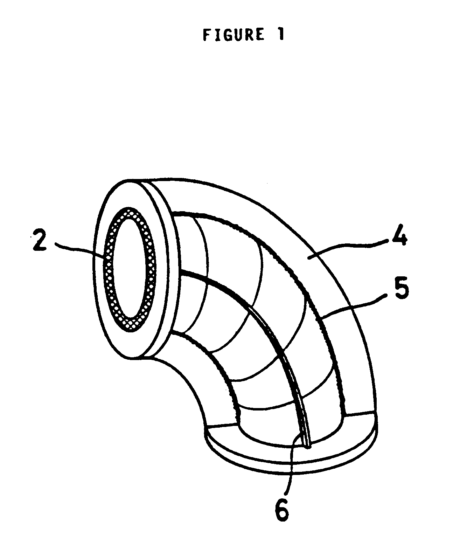

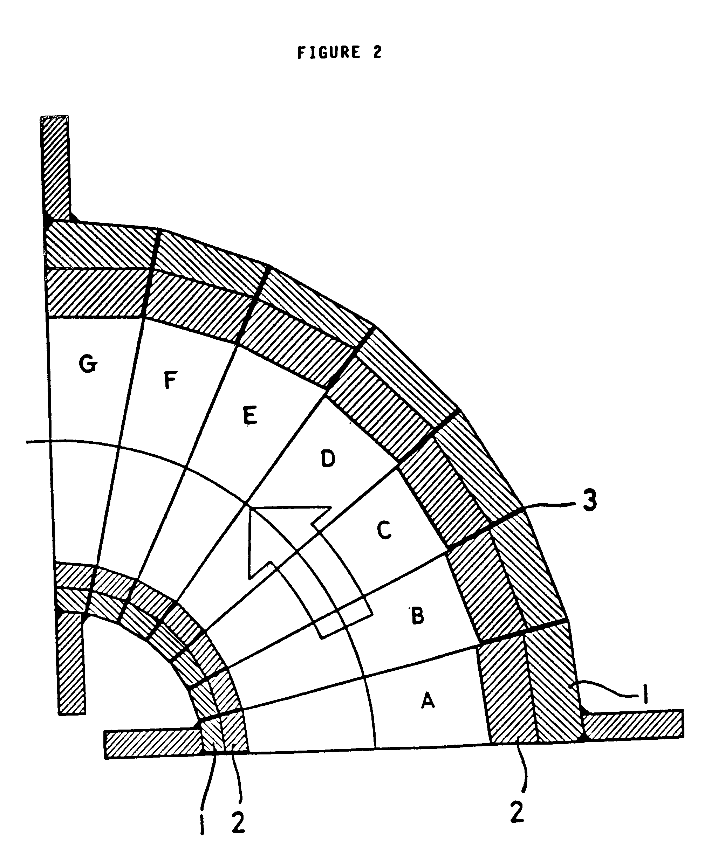

FIG. 1 is a perspective view illustrating a 90° bent pipe of this invention, and FIG. 2 a sectional view taken through its center.

Reference codes 1A - 1G designate nodular pipes defined by splitting the angle of R by a required number, for example, seven, as illustrated; and 2, wear resistant pipes applied as linings on the inside of the nodular pipes, each two of nodular pipes 1A - 1G being coupled through a packing 3, thereby forming an articulate bent pipe.

The nodular pipes are manufactured of easily weldable steel, various types of cast iron, aluminum alloys, FRP, various resins, etc. The pipe illustrated in the figure was manufactured from SC46 cast steel by casting.

In assembling the nodular pipes 1A - 1G into a bent pipe, a packing 3 is interposed between the joining surfaces of each two of the nodular pipes. For the packing, asbestos packing, resins, rubber packing, etc., are available. Normally, use of liquid packing agent is favorable, the assembling being made after applying it on respective joining surfaces. Sometimes, asbestos packing impregnated with liquid packing is utilized.

Various methods may be used for replaceably fixing the assembled nodular pipes. In the example of FIGS. 1 and 2, welding method was employed. Thus with flat bars 4, 4 placed along the curved lines on the outwardly and the inwardly bent sides of the bent pipe, the nodular pipes 1A - 1G are fixed by filet welding as at 5, 5. This method is recommendable for welding of small diameter pipes made of easily weldable material. It permits easy part replacement. Instead of using the flat bars 4, 4 of FIG. 1, spot welding at appropriate intervals along the junction line of each two nodular pipes will do. Numeral 6 in FIG. 1 represents a positioning marking for assembling nodular pipes; it may be either indented or protruded line.

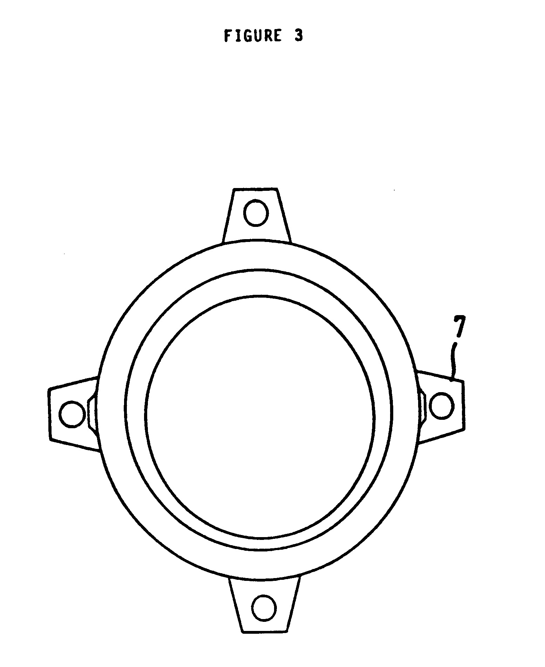

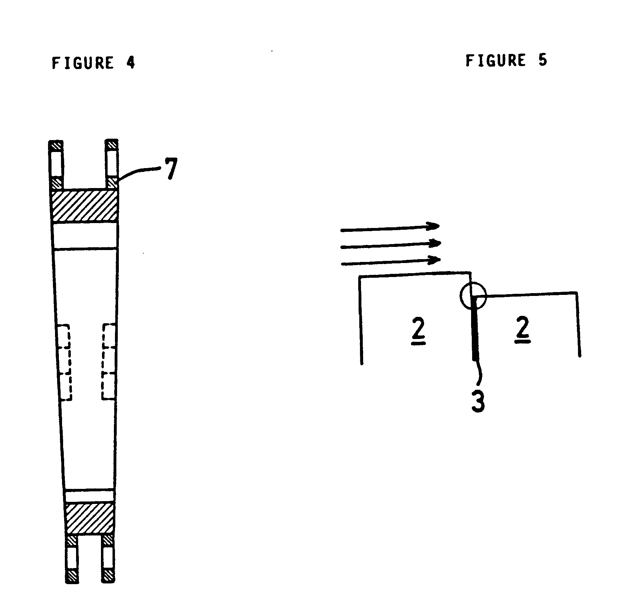

In the case of large diameter bent pipes or of nodular pipes of unweldable materials, as shown in FIGS. 3 and 4, flanges 7 are provided in positions on each nodular pipe corresponding to clock's 12, 3, 6 and 9 o'clock positions. These pipes are assembled with a packing interposed at the joint between each two nodular pipes 1 and opposing flanges clamped to each other by bolting. Such other methods are available. In this instance, one of the facing flanges may be provided with a free hole, while the other may have a tapped hole, thereby to effect fastening. Or they may be substituted, of course, by whole circumferential flanges.

For the material of wear resistant pipe 2, various types of sintered hard alloys, wear resistant cast alloys or ceramics, bricks, refractories, glass, weld metals, etc., are used. The wear resistant pipe 2 may be fused with or welded to or entirely separated from the nodular pipe 1A,1B,...,1G at the joint part. For example, ceramic pipes may be bonded to the nodular pipe with adhesive or screw-fitted by threads. Or it may be merely inserted inside the nodular pipe. However, there should be not much clearance left between the nodular pipe 1A,1B,...,1G and the wear resistant pipe 2.

The nodular pipes 1A, 1B, ... have appropriate split angles, e.g., 5, 10, etc.; the smaller the split angle, the more fully is circle approximated, when they are combined, whereby fluid's flow will become smoother.

In the case of transport media like coke, clinker and fly ash which cause violent grinding wear, as in bent pipes for transporting powder and slurry, for the wear resistant pipe 2 which is in contact with such abrasive media at high speeds, long life can not be ensured, unless it is very hard and made with a substantial thickness. Extra hard materials such as above described, although very hard, are defective in that they are liable to breakage even under a small impact. Especially, aside from impact given on flat surface, impact, if received on edge part, will readily cause breakage. Ceramics are especially vulnerable in this way.

The wear that a bent pipe suffers from transporting medium results from erosion wear as above described. Under the condition of erosion wear, the wear degree of the wear resistant pipe 2 differs depending on the insident angle of the transporting medium, a maximum wear generally taking place around an insident angle of 30°.

According to "Wear and Hard Facing 6.3 Erosion" by Yuko Ito, "If the injection angle is small, grinder particles merely slide on the sample surface; thus, consumption of particles' energy is small, with only slight cutting action. However, as the angle becomes larger, particles begin to give the sample cutting action on its surface. At an angle of 30°, the particles' energy is spent most effectively for the cutting. As the angle exeeds 30°, part of the energy is used for initial cutting, but the remaining part is spent for transformation and melting. This transformation and melting are not directly reflected in the amount of wear; therefore, when the angle is in excess of 30°, the amount of wear will gradually diminish." In bent pipes, a situation approximate to this will develop. Thus the inside surface of the wear resistant pipes applied on the inner surface on the outwardly bent side of the nodular pipes located near the bent part where the extension from the axis of the ID of the straight pipe at the upstream thereof, with regard to the flowing direction of the transporting medium, intersects the bent part, or nodular pipes 1A - 1E, referring to FIG. 2, will sustain wear; as this surface approaches an angle of 30° to the straight pipe, its wear becomes maximized. Especially when such part has a front edge of each wear resistant pipe exposed to the stream, breakage of such part is liable to result from direct collision cutting wear. In the case of erosion wear, if an edge of a wear resistant pipe 2 is once broken, that part only is eroded still deeper, finally developing into large local wears. When replaceable nodular pipes 1A,1B,...,1G are formed into a bent pipe assembly with a packing interposed between each two of them, the joint between each two nodular pipes becomes incontiguous; as a result, the front edge of the joint of the each two wear resistant pipes is directly exposed to the collision by the abrasive medium. As it is hit in this way repeatedly, edge breakage will occur and, as a consequence, wear might proceed deeper and deeper from such broken part. Accordingly, in manufacturing articulate bent pipes, treatment of the joint part will pose as an important factor for improvement of wear resistance.

The articulate bent pipe is formed with the front edge of each wear resistant pipe placed on the inside surface on the outwardly bent side of each nodular pipe (1B, 1C, 1D and 1E in FIG. 1) located near the bent part on which the transporting medium directly collides lower than the rear edge of the neighboring wear resistant pipe placed one node upstream of the former. With this configuration, as shown in FIG. 5, the front edge (inside the circle) of the wear resistant pipe is not exposed to the collision by the stream, but the abrasive medium will merely slide on the flat surface; accordingly, its collision stress is small, thus hardly causing edge breakage.

The step between the rear edge of one wear resistant pipe and the front edge of the following one is normally adequate at 1 - 2mm, but especially, if the step provided is sized larger than the clearance at the joint between nodular pipes, it will not only prevent edge breakage, but also has remarkable effect on protection against wear of packing material in the clearance between nodular pipes. When providing this step, it is advantageous for durability sake to reduce the nodular pipe thickness, while holding constant the thickness of the wear resistant pipe. On the other hand, the inwardly bent side of the bent pipe does not sustain direct collision of transport medium, unlike the outwardly bent side; thus, its wear is small there and, therefore, such a step need not be provided between wear resistant pipes; they may be composed on a common plane. The aforementioned steps, as explained in reference to the example of FIG. 1, are provided up to the nodular pipe 1E, but beyond that, nodular pipes are on a common plane and its rear edge side thickness is increased to gradually restore the former ID dimension.

Effects

(1) Wear of bent pipe occurs normally at a part of the inner surface of its outwardly bent side where it directly receives the most violent collision. It presents an appearance of local wear. The articulate bent pipe of this invention permits easy replacement of only the nodular pipes at the affected part, obviating the need of difficult partial repair or total replacement, as in the case of conventional bent pipes.

(2) Wear of bent pipe varies with positions as hereabove described. For the articulate bent pipes of this invention liner materials (wear resistant pipes) which have different wear resistances may be used in respective positions. For example, referring to FIG. 1, the nodular pipes 1C and 1D sustain the most violent wear; therefore, for wear resistant pipes for this part, ceramics or sintered hard alloys, etc., are employed. For nodular pipes 1A, 1B, 1E and 1F, high chrome cast iron is used for wear resistant pipes, but for 1G which is reduced in diameter to match the ID, thus resulting in resumption of violent collision, ceramics or sintered hard alloys, etc., are used. In that way, appropriate wear resistant materials are combined, so that wear may be controlled to proceed at a uniform overall rate, thereby preventing turbulent flow phenomenon resulting from local wear.

(3) With the front edge of the wear resistant pipe on each nodular pipe at the bent part on which violent direct collision of transport medium occurs formed lower than the rear edge of the neighboring wear resistant pipe located one nodule upstream of the former, edge breakage and packing wear are inhibited, thereby to effect further extension of the bent pipe's useful service life.

(4) While providing successive steps each between the front edge of a wear resistant pipe and the rear edge of its neighboring one, as above described, the pipes' inside diameters at the bent part are successively increased and, then, reduced, so that the flow rate of the transport medium is slowed at the bent part where the abrasion is heaviest; as a result, the collision stress is releaved, resulting in further lessened breakage and slower advancement of wear.

To be sure, the bent pipe may be composed merely with the front edge of a wear resistant pipe on each nodular pipe formed lower than the rear edge of its neighboring wear resistant pipe on another nodular pipe which is located one nodule upstream of the former, without successively increasing the ID at the bent part, and in the bent part as a whole, the average ID for all parts may be made equal to the ID of the straight pipe, but in that way, no change in flow rate can be obtained.

(5) With several types of nodular pipes each having single angles 2.5°, 5°, 10°, etc., arranged on hand, bent pipes having many bending angles like 45°, 90°, 135° or 225°, etc., may be freely and readily created.

(Preferred Embodiment and Effect Achieved by Application of This Invention)

A 90° bent pipe made of carbon steel for pump transport of abrasive carborundum having ID 143φ and thickness 11mm which was designated as Comparative Example No. 1 and similar one made of a high chrome cast iron of C: 2.7% and Cr: 27% and having ID 143φ, its inwardly bent side thickness 11mm and its outwardly bent side thickness 16mm, which was designated as Comparative Example No. 2, were compared with the bent pipe of this invention shown in FIG. 1.

In the bent pipe of this invention abovedescribed, the nodal pipe 1A,1B,...,1G is made of SC46 cast steel and the wear resistant pipe 2 is formed in the following manner: Thus on the inside of the nodular pipes 1A,1B,...,1G a water cooled copper flask is eccentrically placed, with some clearance formed between the nodular pipes and the circular copper flask, where a single layer thick weld metal is formed by way of electrogas welding, using a wire of high carbon, high chrome niobium base carbide hardened metal of C: 5.5%, Cr: 22% and Nb: 7%. The wear resistant pipe 2 has thicknesses of approx. 10mm on its inwardly bent side and approx. 20mm on its outwardly bent side and is fused with the nodular pipe of SC46 at the joining part. The hardness obtained of the wear resistant pipe was HRC60 -63.

Results of comparative tests conducted by making pump transport of an abrasive carborundum which gives far higher grindability than the aforementioned fly ash showed that pitting was observed respectively after 5 days' operation in Example No. 1 and after 30 days operation in Example No. 2. In contrast, the bent pipe of this invention bore use of approx. 120 days.

Thereafter, observation of wear condition revealed particularly heavy wear or the nodular pipes 1C and 1D. Such part was, then, replaced with new nodular pipes and this bent pipe was again put to use. It was found to have borne further 90 days' use. The removed nodular pipes 1C and 1D were repaired by padding and thereby made again usable.

## Claims

1. An articulate bent pipe for transport of powder and slurry comprising a plurality of sector shaped nodular pipes (1A-1G) by which the angle of bending curvature R is divided into a required number of segments, the nodular pipes (1A-1G) having a wear resistant pipe lining (2) of a predetermined thickness applied thereto and being replaceably connected one to another, whereby the inner surface of said bent pipe has such a configuration at the portion which is located away from the center of bending curvature, that, seen in flow direction, the front edge of each wear resistant pipe lining (2) is indented relative to the rear edge of the immediate preceding pipe lining (2), which condition holds at least for those nodular pipes (1A-1G) which are located adjacent a position at which the inlet tangent of the axis of the bent pipe meets the wall of the bent pipe, characterized in that said wear resistant pipe lining (2) applied to said plurality of sector shaped nodular pipes (1A-1G) by which the angle of R is divided into the required number of segments is comprised of different materials having different degrees of wear resistance with respect to its portions or different nodular pipes and that the nodular pipes (1A-1G) are connected one to the other through the intermediacy of packings (3).

## Revendications

1. Coude de canalisation articulé destiné au transport de poudres et boues, comprenant une multiplicité de tuyaux nodulaires profilés (1A-1G) par lesquels l'angle de courbure R est divisé en un nombre de segments requis, les tuyaux nodulaires (1A-1G) étant munis d'un revêtement de tuyau résistant à l'usure (2) d'une épaisseur prédéterminée qui leur est appliqué, et étant raccordés les uns aux autres de manière remplaçable, de sorte que la surface interne dudit coude de canalisation présente une configuration au niveau de la partie qui est située à l'écart du centre de courbure telle que, vue dans la direction d'écoulement, le bord avant de chaque revêtement de tuyau résistant à l'usure (2) se trouve en retrait par rapport au bord arrière du revêtement de tuyau immédiatement précédent (2), cette condition s'appliquant au moins à ceux d'entre les tuyaux nodulaires (1A-1G) qui se trouvent à proximité d'un emplacement au niveau duquel la tangente d'entrée de l'axe du coude de canalisation rencontre la paroi de ce dernier, caractérisé en ce que ledit revêtement de tuyau résistant à l'usure (2) appliqué à ladite multiplicité de tuyaux nodulaires en forme de secteur (1A-1G) par lesquels l'angle R est divisé suivant le nombre de segments requis se compose de matières différentes présentant des degrés de résistance à l'usure différents relativement à ses parties situées sur différents tuyaux nodulaires, et en ce que les tuyaux nodulaires (1A-1G) sont raccordés les uns aux autres par l'intermédiaire de garnitures (3).

## Patentansprüche

1. Gelenkig gebogenes Rohr zum Transport von Pulver oder Aufschlämmung, mit einer Mehrzahl von sektionsförmigen nodularen Rohren (1A-1G), durch die der Winkel der Biegekrümmung R in eine geforderte Anzahl von Segmenten unterteilt wird und die eine daran angebrachte verschleißbeständige Rohrauskleidung (2) vorbestimmter Dicke aufweisen sowie austauschbar miteinander verbunden sind, wobei die innere Oberfläche des gebogenen Rohrs eine solche Konfiguration in dem dem Mittelpunkt der Biegekrümmung abgewandt angeordneten Abschnitt besitzt, daß die in Strömungsrichtung gesehene Vorderkante jeder verschleißbeständigen Rohrauskleidung (2) relativ zur rückwärtigen Kante der unmittelbar vorhergehenden Rohrauskleidung (2) verzahnt bzw. eingesenkt ist, wobei diese Bedingung zumindest für diejenigen nodularen Rohre (1A-1G) zutrifft, die benachbart zu einer Position angeordnet sind, bei der die Einlaßtangente der Achse des gebogenen Rohrs die Wand des gebogenen Rohrs trifft, **dadurch gekennzeichnet, daß** die verschleißbeständige Rohrauskleidung (2), die an der Mehrzahl der sektorförmigen nodularen, den Winkel R in die geforderte Anzahl von Segmente unterteilenden Rohre (1A-1G) angebracht ist, aus unterschiedlichen Materialien mit unterschiedlichem Ausmaß von Verschleißbeständigkeit bezüglich ihrer Abschnitte an verschiedenen nodularen Rohren besteht, und daß die nodularen Rohre (1A-1G) miteinander über Zwischenlage von Füll- bzw. Dichtmaterial (3) miteinander verbunden sind.

FIGURE 1

FIGURE 2

FIGURE 3

FIGURE 4

FIGURE 5